# EUROPEAN PATENT APPLICATION

(11) **EP 4 814 797 A1**
(43) Date of publication of application: **30.09.2026**
(21) Application number: 26165715.9
(22) Date of filing: 18.03.2026
(51) Int. Cl.: G06N 3/0495, G06N 20/00

(54) **SYSTEMS AND METHODS FOR QUANTIZING FLOATING-POINT VALUES DURING OPERATION OF AN AUTOMATED ROBOTIC SYSTEM**

(30) Priority: 28.03.2025 US 202563780070 P
(71) Applicant: Tesla, Inc., Austin, TX 78725 (US)
(72) Inventor: RAWAT, Ritvik, Austin, Texas, 78725 (US); ROTAN, Valeriy, Austin, Texas, 78725 (US); SINGH, Alex, Austin, Texas, 78725 (US); SAMPATHKUMAR, Srihari, Austin, Texas, 78725 (US)
(74) Representative: Liesegang, Eva

(57) **Abstract**

Disclosed herein are systems and methods for quantizing floating-point values during operation of robotic systems. For example, a system can be configured to receive input data having multiple values represented in a floating-point format and determine a maximum absolute value from these values. The system can adjust the representation of each value by removing at least one bit from the exponent portion and redistributing it to the mantissa portion. In examples, the system can also extract a sign bit and align each value by shifting each bit. Based on the adjusted values, the system can perform dynamic quantization of the input data based at least in part on a scaling value determined using the maximum absolute value. The input data can then be provided as an input to at least a portion of a neural network during execution of one or more operations by the neural network.

## Description

### CROSS-REFERENCE TO RELATED APPLICATIONS

This application claims priority to U.S. Provisional Patent Application Serial No. 63/780,070, filed March 28, 2025, which is incorporated by reference in its entirety for all purposes.

### TECHNICAL FIELD

The present application relates generally to machine learning and neural network computation, and more specifically to systems and methods for efficiently quantizing floating-point values during operation of an automated robotic system.

### BACKGROUND

Neural networks have become increasingly sophisticated in their application to automated robotic operations, enabling advanced perception, decision-making, and control capabilities. These artificial intelligence systems can be designed to allow robots to process (or "learn") from experience and adapt to complex environments. Current implementations utilize multilayer neural networks, deep learning algorithms, and specialized architectures tailored to specific robotic tasks such as visual perception, path planning, and motion control.

But as neural networks for robotics become more complex and capable, they are placing greater demands on computational resources and system architectures. The processing requirements for real-time inference and continuous learning are growing exponentially, straining onboard computing capabilities. As a result, it can be extremely difficult to configure increasingly sophisticated and capable neural networks to operate without making corresponding upgrades to the underlying hardware.

### SUMMARY

For at least the aforementioned reasons, there is a desire for methods and systems that can efficiently quantize floating-point values during operation of an automated robotic system. To address the above-noted concerns, systems and methods are described herein that are configured to process input data (e.g., tensors) before providing the input data to at least a portion of a neural network to cause the neural network to generate corresponding outputs used to control automated robotic systems (e.g., automated (or "autonomous") vehicles, humanoid robots, and the like). To process the input data, systems can be configured to determine a maximum absolute value from among a set of values based on (e.g., represented by) the input data, adjust each value of the set of values based on the maximum absolute value (and, in some examples, other factors), and quantize the set of values to generate a quantized set of values. This quantized set of values from the input data can then be provided as an input to a neural network (or portion thereof) to allow for automated operation of the automated robotic system.

By virtue of the implementation of the techniques described herein, several technical benefits can be realized, particularly in terms of reducing computing resources, minimizing the need for additional resources as neural network ("model") complexity increases over time and/or version, and reducing memory consumption. By converting the first set of values to a quantized set of values, the systems can be configured to reduce the degree of possible precision of the data to focus on the precision needed for certain tasks, which in turn can reduces the computational load on the processors, allowing for faster processing and less power consumption. More specifically, by using a second data format that involves a smaller exponent portion, a more compact representation of the values processed can be obtained, which becomes increasingly important as the complexity of the neural network model grows. This can allow for resources to remain static and not proportionally increased in response to the increase in model complexity. Additionally, in some instances, transitioning from a first data format to a second data format (through quantization) can allow for reductions in memory consumption. Alone or in combination, these improvements can allow for a more efficient and scalable automated robotic systems, capable of handling complex tasks without a proportional increase in computing and memory resources.

In some aspects, a system for quantizing floating-point values during operation of an automated robotic system, is disclosed. The system can include one or more processors. The one or more processors can be configured to obtain input data including a first set of values represented using a first data format during operation of an automated robotic system. In some implementations, the one or more processors can be configured to determine a maximum absolute value from among the first set of values based on the input data; in response to determining the maximum absolute value, adjust each value of the first set of values based on the maximum absolute value In implementations, the one or more processors can be configured to quantize the first set of values based on an exponent and a mantissa of each value to generate a quantized set of values having a second data format. In some implementations, the one or more processors can be configured to provide at least a portion of the quantized set of values to a neural network to cause the neural network to generate an output based on the quantized set of values. In implementations, the one or more processors can be configured to and control operation of the automated robotic system based on the output of the neural network.

In some aspects, the one or more processors configured to adjust each value can be configured to determine a scaling value based on the maximum absolute value and a predetermined maximum value; and update each value by multiplying each value with the scaling value.

In aspects, the techniques described herein relate to a system, wherein the first data format includes a floating point format, and wherein the second data format includes an integer format.

In some aspects, the techniques described herein relate to a system, wherein the one or more processors configured to adjust the exponent of each value of the first set of values can be configured to: remove at least one first bit from an exponent portion of each value (e.g., through execution of one or more operations such as a shift left operation); and shift (e.g., reassign) at least one second bit from the exponent portion and a mantissa portion of each value left by at least one position to align the set of values.

In aspects, the techniques described herein relate to a system, wherein the one or more processors can be further configured to: reassign a first bit from the exponent portion of each value to the mantissa portion of each value.

In some aspects, the techniques described herein relate to a system, wherein the one or more processors can be further configured to: update each value of the first set of values in accordance with a bias to configure each value to be associated with a substantially symmetric exponent range.

In aspects, the techniques described herein relate to a system, wherein the one or more processors can be further configured to: extract a sign value from the set of values and update the set of values based on the sign value.

In other embodiments, a method is disclosed. The method can include obtaining, by one or more processors, input data including a first set of values represented using a first data format during operation of an automated robotic system. In some implementations, the method can include determining, by the one or more processors, a maximum absolute value from among the first set of values based on the input data. In implementations, the method can include, in response to determining the maximum absolute value, adjusting, by the one or more processors, each value of the first set of values based on the maximum absolute value. In some implementations, the method can include quantizing, by the one or more processors, the first set of values based on an exponent and a mantissa of each value to generate a quantized set of values having a second data format. In implementations, the method can include providing, by the one or more processors, at least a portion of the quantized set of values to a neural network to cause the neural network to generate an output based on the quantized set of values. In some implementations, the method can include controlling, by the one or more processors, operation of the automated robotic system based on the output of the neural network.

In some aspects, adjusting each value can include determining, by the one or more processors, a scaling value based on the maximum absolute value and a predetermined maximum value, and updating, by the one or more processors, each value by multiplying each value with the scaling value.

In aspects, the first data format can include a floating point format, and the second data format can include an integer format.

In some aspects, adjusting the exponent of each value of the first set of values can include removing, by the one or more processors, at least one first bit from an exponent portion of each value, and shifting, by the one or more processors, at least one second bit from the exponent portion and a mantissa portion of each value left by at least one position to align the set of values.

In aspects, the method can further include reassigning, by the one or more processors, a first bit from the exponent portion of each value to the mantissa portion of each value.

In some aspects, the method can further include updating, by the one or more processors, each value of the first set of values in accordance with a bias to configure each value to be associated with a substantially symmetric exponent range.

In aspects, the method can further include extracting, by the one or more processors, a sign value from the set of values, and updating, by the one or more processors, the set of values based on the sign value.

In some aspects, one or more non-transitory computer-readable media are disclosed storing instructions thereon that, when executed by one or more processors, cause the one or more processors to obtain input data including a first set of values represented using a first data format during operation of an automated robotic system. In some implementations, the instructions can cause the one or more processors to determine a maximum absolute value from among the first set of values based on the input data. In response to determining the maximum absolute value, the instructions can cause the one or more processors to adjust each value of the first set of values based on the maximum absolute value. In some implementations, the instructions can cause the one or more processors to quantize the first set of values based on an exponent and a mantissa of each value to generate a quantized set of values having a second data format. In implementations, the instructions can cause the one or more processors to provide at least a portion of the quantized set of values to a neural network to cause the neural network to generate an output based on the quantized set of values. In some implementations, the instructions can cause the one or more processors to control operation of the automated robotic system based on the output of the neural network.

In aspects, the instructions that cause the one or more processors to adjust each value can cause the one or more processors to determine a scaling value based on the maximum absolute value and a predetermined maximum value, and update each value by multiplying each value with the scaling value.

In some aspects, the techniques described herein relate to one or more non-transitory computer-readable media, wherein the first data format includes a floating point format, and wherein the second data format includes an integer format.

In aspects, the instructions that cause the one or more processors to adjust the exponent of each value of the first set of values can cause the one or more processors to remove at least one first bit from an exponent portion of each value; and shift at least one second bit from the exponent portion and a mantissa portion of each value left by at least one position to align the set of values.

In some aspects, the instructions can further cause the one or more processors to reassign a first bit from the exponent portion of each value to the mantissa portion of each value.

In aspects, the instructions can further cause the one or more processors to: update each value of the first set of values in accordance with a bias to configure each value to be associated with a substantially symmetric exponent range.

It is to be understood that both the foregoing general description and the following detailed description are exemplary and explanatory and are intended to provide further explanation of the embodiments described herein.

### BRIEF DESCRIPTION OF THE DRAWINGS

Non-limiting embodiments of the present disclosure are described by way of example concerning the accompanying figures, which are schematic and are not intended to be drawn to scale. Unless indicated as representing the background art, the figures represent aspects of the disclosure.
**FIG. 1A** illustrates components of an AI-enabled visual data analysis system configured in part to quantize floating-point values during operation of an automated robotic system, according to embodiments.
**FIG. 1B** illustrates various sensors associated with an ego according to embodiments.
**FIG. 1C** illustrates the components of a vehicle, according to embodiments.
**FIG. 2** illustrates a flow diagram of a process for quantizing floating-point values during operation of an automated robotic system, according to embodiments.
**FIGS. 3A** and **3B** illustrate an example implementation involving quantization of floating-point values during operation of an automated robotic system, according to embodiments.
**FIGS. 4A-4C** illustrate example functions that can be implemented, according to embodiments.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one skilled in the relevant art and having possession of this disclosure, are to be considered within the scope of the subject matter disclosed herein. Other embodiments may be used and/or other changes may be made without departing from the spirit or scope of the present disclosure. The illustrative embodiments described in the detailed description are not meant to be limiting to the subject matter presented.

For neural network inference, a format of E8M6 may not be the most useful because it has an exponent range that may not be needed for inference. With 8 bits of exponent, systems can be configured to represent values as big as 10³⁸ and as small as 10⁻³⁸. But during the forward pass through a neural network (e.g., during training or inference) this large of a dynamic range may not be needed to maintain reasonable accuracy and/or precision. The IEEE floating point format has 8 bits and a bias of 127, but if systems are configured to go down to 7 bits, then values can still be represented as big as 10¹⁹ and as small as 10⁻¹⁹. And because the bias for the exponent will now be 63 and not 127, this new data format can be E7M7, which has the same mantissa bits as bf16 (E8M7), a ubiquitous training time data format. Additionally, because the 8-bit exponent is not necessarily needed, systems can be implemented without a train-test mismatch. The present disclosure describes techniques that can implement this new format for high-performance dynamically quantized arithmetic, including dynamically quantized arithmetic such as maximum absolute pass, quantization, and real operation (e.g., convolutions, etc.).

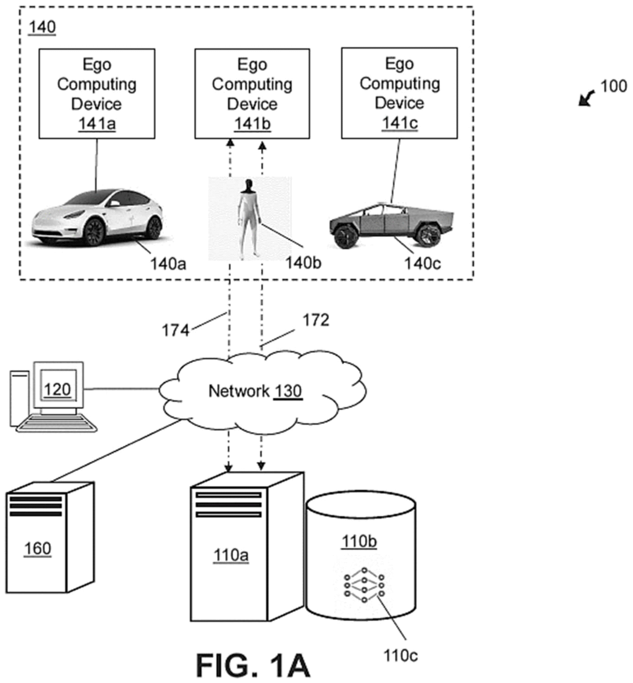

**FIG. 1A** is a non-limiting example of components of a system in which the methods and systems discussed herein can be implemented. **FIG. 1A** illustrates components of an AI-enabled visual data analysis system **100.** The system **100** may include an analytics server **110a,** a system database **110b,** an administrator computing device **120,** egos **140a** and **140b** (collectively ego(s) **140),** ego computing devices **141a-c** (collectively ego computing devices **141),** and a server **160.** The system **100** is not confined to the components described herein and may include additional or other components not shown for brevity, which are to be considered within the scope of the embodiments described herein.

The above-mentioned components may be connected through a network **130.** Examples of the network **130** may include, but are not limited to, private or public LAN, WLAN, MAN, WAN, and the Internet. The network **130** may include wired and/or wireless communications according to one or more standards and/or via one or more transport mediums.

The communication over the network **130** may be performed in accordance with various communication protocols such as Transmission Control Protocol and Internet Protocol (TCP/IP), User Datagram Protocol (UDP), and IEEE communication protocols. In one example, the network 130 may include wireless communications according to Bluetooth specification sets or another standard or proprietary wireless communication protocol. In another example, the network 130 may also include communications over a cellular network, including, for example, a GSM (Global System for Mobile Communications), CDMA (Code Division Multiple Access), or an EDGE (Enhanced Data for Global Evolution) network.

The system **100** illustrates an example of a system architecture and components that can be used to train and execute one or more AI models, such the AI model(s) **110c.** Specifically, as depicted in **FIG. 1A** and described herein, the analytics server **110a** can execute the AI model(s) **110c** using data retrieved from the egos **140** (e.g., by using data streams **172** and **174)** to make navigational decisions. When the AI model(s) **110c** have been trained, each of the egos **140** may have access to and execute the trained AI model(s) **110c.** For instance, the vehicle **140a** having the ego computing device **141a** may transmit its camera feed to the trained AI model(s) **110c** and may determine the occupancy status of its surroundings (e.g., data stream **174).** Moreover, the data ingested and/or predicted by the AI model(s) **110c** with respect to the egos **140** (at inference time) may also be used to improve the AI model(s) **110c.** Therefore, the system **100** depicts a continuous loop that can periodically improve the accuracy of the AI model(s) **110c.** Moreover, the system **100** depicts a loop in which data received the egos **140** can be used at training phase in addition to the inference phase.

The analytics server **110a** may be configured to collect, process, and analyze navigation data (e.g., images captured while navigating) and various sensor data collected from the egos **140.** The collected data may then be processed and prepared into a training dataset. The training dataset may then be used to train one or more AI models, such as the AI model **110c.** The analytics server **110a** may also be configured to collect visual data from the egos **140.** Using the AI model **110c** (trained using the methods and systems discussed herein), the analytics server **110a** may generate navigational decisions for the egos **140.**

In **FIG. 1A****,** the AI model **110c** is illustrated as a component of the system database **110b,** but the AI model **110c** may be stored in a different or a separate component, such as cloud storage or any other data repository accessible to the analytics server **110a.**

The analytics server **110a** may also be configured to display an electronic platform illustrating various training attributes for training the AI model **110c.** The electronic platform may be displayed on the administrator computing device **120,** such that an analyst can monitor the training of the AI model **110c.** An example of the electronic platform generated and hosted by the analytics server **110a** may be a web-based application or a website configured to display the training dataset collected from the egos 140 and/or training status/metrics of the AI model **110c.**

The analytics server **110a** may be any computing device comprising a processor and non-transitory machine-readable storage capable of executing the various tasks and processes described herein. Non-limiting examples of such computing devices may include workstation computers, laptop computers, server computers, and the like. While the system **100** includes a single analytics server **110a,** the system **100** may include any number of computing devices operating in a distributed computing environment, such as a cloud environment.

The egos **140** may represent various electronic data sources that transmit data associated with their previous or current navigation sessions to the analytics server **110a.** The egos **140** may be any apparatus configured for navigation, such as a vehicle **140a** and/or a truck **140c.** The egos **140** are not limited to being vehicles and may include robotic devices as well. For instance, the egos **140** may include a robot **140b,** which may represent a general purpose, bipedal, autonomous humanoid robot capable of navigating various terrains. The robot **140b** may be equipped with software that enables balance, navigation, perception, or interaction with the physical world. The robot **140b** may also include various cameras configured to transmit visual data to the analytics server **110a.**

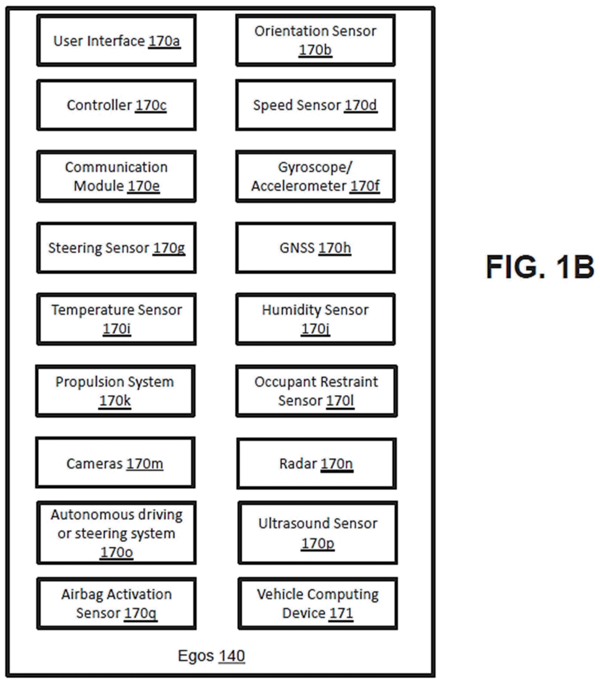

Even though referred to herein as an "ego," the egos **140** may or may not be autonomous devices configured for automatic navigation. For instance, in some embodiments, the ego **140** may be controlled by a human operator or by a remote processor. The ego **140** may include various sensors, such as the sensors depicted in **FIG. 1B****.** The sensors may be configured to collect data as the egos **140** navigate various terrains (e.g., roads). The analytics server **110a** may collect data provided by the egos **140.** For instance, the analytics server **110a** may obtain navigation session and/or road/terrain data (e.g., images of the egos **140** navigating roads) from various sensors, such that the collected data is eventually used by the AI model **110c** for training purposes.

As used herein, a navigation session corresponds to a trip where egos **140** travel a route, regardless of whether the trip was autonomous or controlled by a human. In some embodiments, the navigation session may be for data collection and model training purposes. However, in some other embodiments, the egos **140** may refer to a vehicle purchased, rented, leased, etc. by a consumer and the purpose of the trip may be categorized as everyday use. The navigation session may start when the egos **140** move from a non-moving position beyond a threshold distance (e.g., 0.1 miles, 100 feet) or exceed a threshold speed (e.g., over 0 mph, over 1 mph, over 5 mph). The navigation session may end when the egos **140** are returned to a non-moving position and/or are turned off (e.g., when a driver exits a vehicle).

The egos **140** may represent a collection of egos monitored by the analytics server **110a** to train the AI model(s) **110c.** For instance, a driver for the vehicle **140a** may authorize the analytics server **110a** to monitor data associated with their respective vehicle. As a result, the analytics server **110a** may utilize various methods discussed herein to collect sensor/camera data and generate a training dataset to train the AI model(s) 110c accordingly. The analytics server **110a** may then apply the trained AI model(s) **110c** to analyze data associated with the egos **140** and to predict a navigational decision. Moreover, additional/ongoing data associated with the egos **140** can also be processed and added to the training dataset, such that the analytics server **110a** re-calibrates the AI model(s) **110c** accordingly. Therefore, the system **100** depicts a loop in which navigation data received from the egos **140** can be used to train the AI model(s) **110c.** The egos **140** may include processors that execute the trained AI model(s) **110c** for navigational purposes. While navigating, the egos **140** can collect additional data regarding their navigation sessions, and the additional data can be used to calibrate the AI model(s) **110c.** That is, the egos **140** represent egos that can be used to train, execute/use, and re-calibrate the AI model(s) **110c.** In a non-limiting example, the egos **140** represent vehicles purchased by customers that can use the AI model(s) **110c** to autonomously navigate while simultaneously improving the AI model(s) **110c.**

The egos **140** may be equipped with various technology allowing the egos to collect data from their surroundings and (possibly) navigate autonomously. For instance, the egos **140** may be equipped with inference chips to run self-driving software.

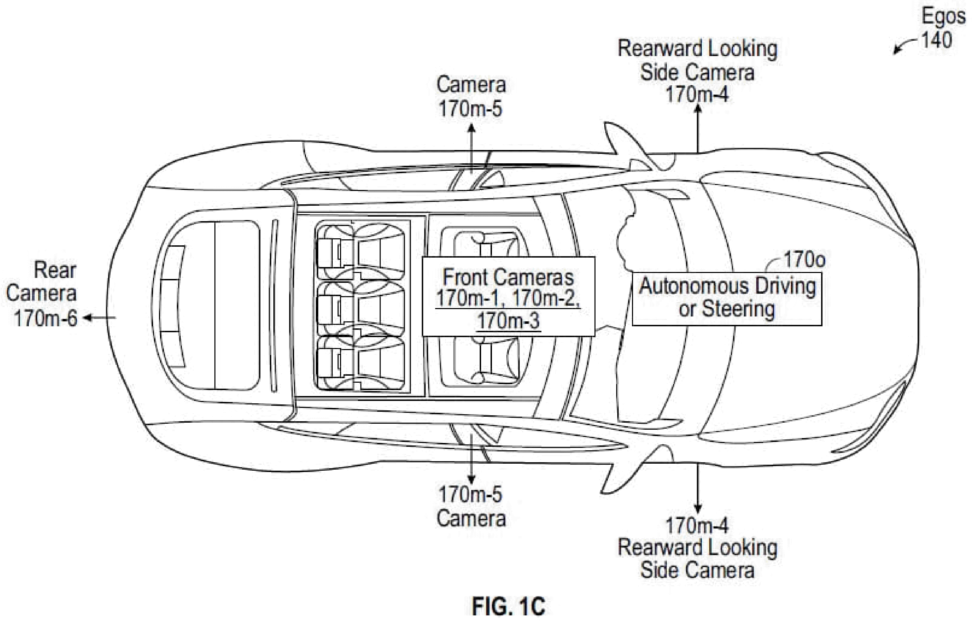

Various sensors for each ego **140** may monitor and transmit the collected data associated with different navigation sessions to the analytics server **110a.** **FIGS. 1B** and **C** illustrate block diagrams of sensors integrated within the egos **140,** according to embodiments. The number and position of each sensor discussed with respect to **FIGS. 1B** and C may depend on the type of ego discussed in **FIG. 1A****.** For instance, the robot **140b** may include different sensors than the vehicle **140a** or the truck **140c.** For instance, the robot **140b** may not include the airbag activation sensor **170q.** Moreover, the sensors of the vehicle **140a** and the truck **140c** may be positioned differently than illustrated in **FIG. 1C****.**

As discussed herein, various sensors integrated within each ego **140** may be configured to measure various data associated with each navigation session. A vehicle computing device **171** (similar to the ego computing device **141a** or **141c)** may periodically collect data monitored and collected by these sensors and transmit the data to the analytics server **110a,** wherein the data is processed in accordance with the methods described herein and used to train the AI model **110c** and/or execute the AI model **110c** to generate the occupancy map.

The egos **140** may include a user interface **170a.** The user interface **170a** may refer to a user interface of an ego computing device (e.g., the ego computing devices **141** in **FIG. 1A****).** The user interface **170a** may be implemented as a display screen integrated with or coupled to the interior of a vehicle, a heads-up display, a touchscreen, or the like. The user interface **170a** may include an input device, such as a touchscreen, knobs, buttons, a keyboard, a mouse, a gesture sensor, a steering wheel, or the like. In various embodiments, the user interface **170a** may be adapted to provide user input (e.g., as a type of signal and/or sensor information) to other devices or sensors of the egos **140** (e.g., sensors illustrated in **FIG. 1B****),** such as a controller **170c.**

The user interface **170a** may also be implemented with one or more logic devices that may be adapted to execute instructions, such as software instructions, implementing any of the various processes and/or methods described herein. For example, the user interface **170a** may be adapted to form communication links, transmit and/or receive communications (e.g., sensor signals, control signals, sensor information, user input, and/or other information), or perform various other processes and/or methods. In another example, the driver may use the user interface **170a** to control the temperature of the egos **140** or activate its features (e.g., autonomous driving or steering system **170o**). Therefore, the user interface **170a** may monitor and collect driving session data in conjunction with other sensors described herein. The user interface **170a** may also be configured to display various data generated/predicted by the analytics server **110a** and/or the AI model **110c.**

An orientation sensor **170b** may be implemented as one or more of a compass, float, accelerometer, and/or other digital or analog device capable of measuring the orientation of the egos **140** (e.g., magnitude and direction of roll, pitch, and/or yaw, relative to one or more reference orientations such as gravity and/or magnetic north). The orientation sensor **170b** may be adapted to provide heading measurements for the egos **140.** In other embodiments, the orientation sensor **170b** may be adapted to provide roll, pitch, and/or yaw rates for the egos **140** using a time series of orientation measurements. The orientation sensor **170b** may be positioned and/or adapted to make orientation measurements in relation to a particular coordinate frame of the egos **140.**

A controller **170c** may be implemented as any appropriate logic device (e.g., processing device, microcontroller, processor, application-specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of the egos **140.** Such software instructions may also implement methods for processing sensor signals, determining sensor information, providing user feedback (e.g., through user interface **170a),** querying devices for operational parameters, selecting operational parameters for devices, or performing any of the various operations described herein.

A communication module **170e** may be implemented as any wired and/or wireless interface configured to communicate sensor data, configuration data, parameters, and/or other data and/or signals to any feature shown in **FIG. 1A** (e.g., analytics server **110a).** As described herein, in some embodiments, communication module **170e** may be implemented in a distributed manner such that portions of communication module **170e** are implemented within one or more elements and sensors shown in **FIG. 1B****.** In some embodiments, the communication module **170e** may delay communicating sensor data. For instance, when the egos **140** do not have network connectivity, the communication module **170e** may store sensor data within temporary data storage and transmit the sensor data when the egos **140** are identified as having proper network connectivity.

A speed sensor **170d** may be implemented as an electronic pitot tube, metered gear or wheel, water speed sensor, wind speed sensor, wind velocity sensor (e.g., direction and magnitude), and/or other devices capable of measuring or determining a linear speed of the egos **140** (e.g., in a surrounding medium and/or aligned with a longitudinal axis of the egos **140)** and providing such measurements as sensor signals that may be communicated to various devices.

A gyroscope/accelerometer **170f** may be implemented as one or more electronic sextants, semiconductor devices, integrated chips, accelerometer sensors, or other systems or devices capable of measuring angular velocities/accelerations and/or linear accelerations (e.g., direction and magnitude) of the egos **140,** and providing such measurements as sensor signals that may be communicated to other devices, such as the analytics server **110a.** The gyroscope/accelerometer **170f** may be positioned and/or adapted to make such measurements in relation to a particular coordinate frame of the egos **140.** In various embodiments, the gyroscope/accelerometer **170f** may be implemented in a common housing and/or module with other elements depicted in **FIG. 1B** to ensure a common reference frame or a known transformation between reference frames.

A global navigation satellite system (GNSS) **170h** may be implemented as a global positioning satellite receiver and/or another device capable of determining absolute and/or relative positions of the egos **140** based on wireless signals received from space-born and/or terrestrial sources, for example, and capable of providing such measurements as sensor signals that may be communicated to various devices. In some embodiments, the GNSS **170h** may be adapted to determine the velocity, speed, and/or yaw rate of the egos **140** (e.g., using a time series of position measurements), such as an absolute velocity and/or a yaw component of an angular velocity of the egos **140.**

A temperature sensor **170i** may be implemented as a thermistor, electrical sensor, electrical thermometer, and/or other devices capable of measuring temperatures associated with the egos **140** and providing such measurements as sensor signals. The temperature sensor **170i** may be configured to measure an environmental temperature associated with the egos **140,** such as a cockpit or dash temperature, for example, which may be used to estimate a temperature of one or more elements of the egos **140.**

A humidity sensor **170j** may be implemented as a relative humidity sensor, electrical sensor, electrical relative humidity sensor, and/or another device capable of measuring a relative humidity associated with the egos **140** and providing such measurements as sensor signals.

A steering sensor **170g** may be adapted to physically adjust a heading of the egos **140** according to one or more control signals and/or user inputs provided by a logic device, such as controller 170c. Steering sensor **170g** may include one or more actuators and control surfaces (e.g., a rudder or other type of steering or trim mechanism) of the egos **140** and may be adapted to physically adjust the control surfaces to a variety of positive and/or negative steering angles/positions. The steering sensor **170g** may also be adapted to sense a current steering angle/position of such steering mechanism and provide such measurements.

A propulsion system **170k** may be implemented as a propeller, turbine, or other thrust-based propulsion system, a mechanical wheeled and/or tracked propulsion system, a wind/sail-based propulsion system, and/or other types of propulsion systems that can be used to provide motive force to the egos **140.** The propulsion system **170k** may also monitor the direction of the motive force and/or thrust of the egos **140** relative to a coordinate frame of reference of the egos **140.** In some embodiments, the propulsion system **170k** may be coupled to and/or integrated with the steering sensor **170g.**

An occupant restraint sensor **170l** may monitor seatbelt detection and locking/unlocking assemblies, as well as other passenger restraint subsystems. The occupant restraint sensor **170l** may include various environmental and/or status sensors, actuators, and/or other devices facilitating the operation of safety mechanisms associated with the operation of the egos **140.** For example, occupant restraint sensor **170l** may be configured to receive motion and/or status data from other sensors depicted in **FIG. 1B****.** The occupant restraint sensor **170l** may determine whether safety measurements (e.g., seatbelts) are being used.

Cameras **170m** may refer to one or more cameras integrated within the egos **140** and may include multiple cameras integrated (or retrofitted) into the ego **140,** as depicted in **FIG. 1C****.** The cameras **170m** may be interior- or exterior-facing cameras of the egos **140.** For instance, as depicted in **FIG. 1C**, the egos **140** may include one or more interior-facing cameras **170m-1.** These cameras may monitor and collect footage of the occupants of the egos **140.** The egos **140** may also include a forward-looking side camera **170m-2,** a camera **170m-3m,** side camera **170m-5** (e.g., integrated within the door frame), a rearward-looking side camera **170m-4,** and a rear camera **170m-6.**

In some embodiments, the methods and systems discussed herein can operate exclusively with 2D sensors (e.g., 2D cameras) that may explicitly exclude depth cameras, time-of-flight (ToF) sensors, and other specialized depth-sensing technologies. The AI model and processing pipelines discussed herein can be trained to extract spatial and environmental information solely from monocular or stereo 2D image inputs without relying on depth estimation hardware. This ensures compatibility with 2D camera systems that only transmit captured images without any additional depth data, while maintaining robust performance in autonomous navigation and visual data analysis.

Referring to **FIG. 1B****,** a radar **170n** and ultrasound sensors **170p** may be configured to monitor the distance of the egos **140** to other objects, such as other vehicles or immobile objects (e.g., trees or garage doors). The radar **170n** and the ultrasound sensors **170p** may be integrated into the egos **140** as depicted in **FIG. 1C****.** The egos **140** may also include an autonomous driving or steering system **170o** configured to use data collected via various sensors (e.g., radar **170n,** speed sensor **170d,** and/or ultrasound sensors **170p)** to autonomously navigate the ego **140.**

Therefore, autonomous driving or steering system **170o** may analyze various data collected by one or more sensors described herein to identify driving data. For instance, autonomous driving or steering system **170o** may calculate a risk of forward collision based on the speed of the ego **140** and its distance to another vehicle on the road. The autonomous driving or steering system **170o** may also determine whether the driver is touching the steering wheel. The autonomous driving or steering system **1700** may transmit the analyzed data to various features discussed herein, such as the analytics server.

An airbag activation sensor **170q** may anticipate or detect a collision and cause the activation or deployment of one or more airbags. The airbag activation sensor **170q** may transmit data regarding the deployment of an airbag, including data associated with the event causing the deployment.

Referring back to **FIG. 1A****,** the administrator computing device **120** may represent a computing device operated by a system administrator. The administrator computing device **120** may be configured to display data retrieved or generated by the analytics server **110a** (e.g., various analytic metrics and risk scores), wherein the system administrator can monitor various models utilized by the analytics server **110a,** review feedback, and/or facilitate the training of the AI model(s) **110c** maintained by the analytics server **110a.**

The ego(s) **140** may be any device configured to navigate various routes, such as the vehicle **140a** or the robot **140b.** As discussed with respect to **FIGS. 1B-C****,** the ego **140** may include various telemetry sensors. The egos **140** may also include ego computing devices **141.** Specifically, each ego may have its own ego computing device **141.** For instance, the truck **140c** may have the ego computing device **141c.** For brevity, the ego computing devices are collectively referred to as the ego computing device(s) **141.** The ego computing devices **141** may control the presentation of content on an infotainment system of the egos **140,** process commands associated with the infotainment system, aggregate sensor data, manage communication of data to an electronic data source, receive updates, and/or transmit messages. In one configuration, the ego computing device **141** communicates with an electronic control unit. In another configuration, the ego computing device **141** is an electronic control unit. The ego computing devices **141** may comprise a processor and a non-transitory machine-readable storage medium capable of performing the various tasks and processes described herein. For example, the AI model(s) **110c** described herein may be stored and performed (or directly accessed) by the ego computing devices **141.** Non-limiting examples of the ego computing devices **141** may include a vehicle multimedia and/or display system.

In operation, the one or more egos **140** may collect image data from their cameras and transmit the image data to the processor (placed locally on the one or more egos **140)** and/or the analytics server **110a,** as depicted in the data stream **172.** The processor may then execute the AI model(s) **110c** to predict navigational decisions for the one or more egos **140.**

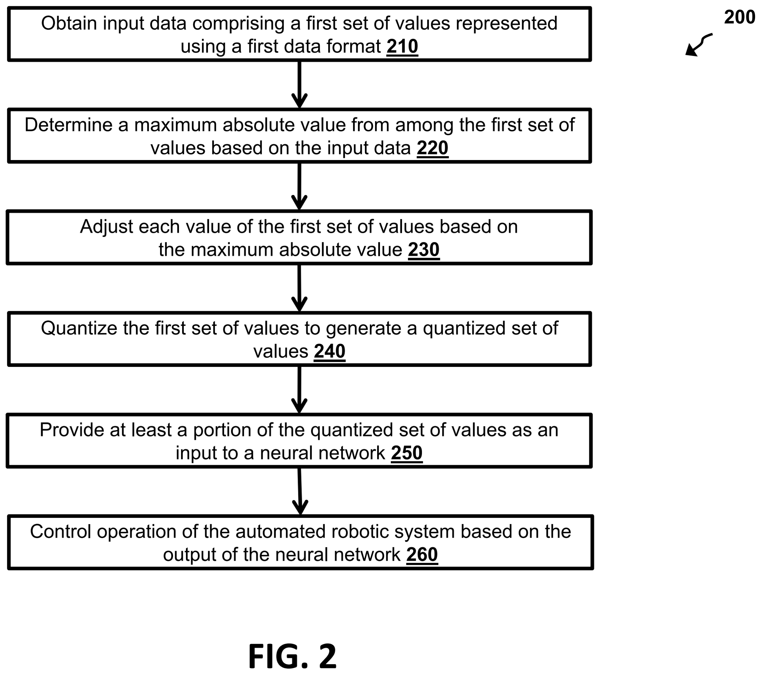

**FIG. 2** illustrates a flow diagram of a method **200** executed for efficiently quantizing floating-point values during operation of an automated robotic system, according to embodiments. The method **200** may include operations **210-260.** However, other embodiments may include additional or alternative steps or may omit one or more steps altogether. The method **200** is described as being executed by an analytics server (e.g., a computer similar to the analytics server **110a).** However, one or more steps of the method **200** may be executed by any number of computing devices operating in the distributed computing system described in **FIGS. 1A** and **1B** (e.g., a processor of the egos **140** and/or egos computing device **141).** For instance, one or more computing devices may locally perform some or all of the steps described in **FIG. 2****.**

At operation **210,** the analytics server can obtain input data comprising a first set of values represented using a first data format. For example, the analytics server can obtain input data that is based on image data generated by one or more cameras integrated into an automated robotic system (e.g., an autonomous vehicle, humanoid robot, etc.). In this example, the input data can include multi-dimensional tensor representations of two-dimensional (2D) raw image data captured by RGB cameras or three-dimensional (3D) representations of the space around the automated robotic system that are derived using, e.g., stereoscopic imaging techniques which are converted into a first format. This first format can include floating-point formats (e.g., fp32, etc.) to preserve numerical precision during mathematical operations. In some examples, the analytics server can receive the input data, where the input data includes preprocessed tensors structured as height x length x width channel arrays, and where floating-point values represent pixel intensities, depth measurements, or feature map activations. In other examples, the analytics server can receive the input data, where the input data includes outputs from portions of a neural network (e.g., tensors, etc.).

In some embodiments, the analytics server can serialize the input data to transition the values represented using the first format into a binary representation. For example, the analytics server can convert each value from the first set of values into a standardized format (e.g., binary) by decomposing each floating-point number into its constituent parts: a sign bit, exponent bits, and mantissa bits. In at least some examples, the analytics server can arrange these components into a fixed sequence of bits, following a predetermined configuration for floating-point representation (e.g., E8M7, E7M7, etc., where E7 indicates 7 bits are reserved for the exponent portion and M7 indicates 7 bits are reserved for the mantissa portion). As described herein, each floating-point representation can be represented in accordance with a degree of precision. These can include, for example, single-precision floating-point format (fp32) which uses 32 bits to represent a number, brain floating-point format (bf16) which uses a 16 bit format having 1 sign bit, 8 exponent bits, and 7 mantissa bits to maintain a similar dynamic range to fp32 while reducing memory requirements and potentially increasing calculation speed, a bf15 format which can use 15 bits instead of 16 to represent a number, etc.

At operation **220,** the analytics server can determine a maximum absolute value from among the first set of values based on the input data. For example, the analytics server can determine a maximum absolute value from a set of values included in the input data by performing direct comparisons between the values. In an example, the analytics server can initialize a variable to store a current maximum value. The analytics server can then iteratively process each value (e.g., each element) of the input data by comparing it to the current maximum value. In some examples, the analytics server can first shift each bit left one position, removing and/or eliminating the sign bit and representing the value as an absolute value. After the comparisons, the analytics server can iterate through the remaining values, comparing each to the current maximum and updating the maximum if a larger value is encountered.

At operation **230,** the analytics server can adjust each value of the first set of values based on the maximum absolute value. For example, the analytics server can adjust each value of the first set of values based on (e.g., in response to) the analytics server determining the maximum absolute value included in the first set of values. The analytics server can then use the maximum absolute value and a maximum value (e.g., a predetermined value corresponding to the largest representable value within the quantized range that the analytics server is configured to use for quantization) to determine a scaling value usable to adjust (e.g., scale) each value of the first set of values. This scaling value can represent an inverse scale (e.g., "inv_scale") that is the result of dividing a maximum amount (e.g., "INT_MAX") by the maximum absolute value (e.g., "max_abs") for the input data. $inv_scale = INT_MAX / max_abs$ In some embodiments, the analytics server can then determine the scaling value and then update each value of the first set of values, as described herein.

In some embodiments, the analytics server can execute one or more operations to preprocess the values in the first set of values before quantizing the first set of values. For example, the analytics server can execute one or more operations that involve removing at least one first bit from an exponent portion of each value and shifting at least one second bit from the exponent portion and a mantissa portion of each value left by at least one position to align the set of values. $aligned_element = shift_left \left(element, 16\right)$ In the above example, the analytics server can execute these one or more operations to shifts the bits of each value 16 positions to the left, aligning a bit field (e.g., bf15) represented by each value with a larger register format (e.g., fp32). This can result in the reassignment of one bit from the exponent portion to the mantissa portion of the value. In some examples, the analytics server can then extract a sign bit. $sign = aligned_element & 0 x 40000000$ In the above example, the analytics server can execute operations to extract the sign bit from aligned_element. The analytics server can perform a bitwise AND with 0x40000000, which isolates the second highest bit (the sign bit in this context). Once aligned, the analytics server can then add the sign bit to each value. $fp 32 _e 7 = aligned_element + sign$ In the above example, the analytics server can add the extracted sign bit to aligned_element to adjust the value based on the sign bit. The analytics server can then adjust the exponent portion of the value. $fp 32 _e 8 = fp 32 _e 7 + \left(64≪23\right)$ For example, as shown above, the analytics server can adjust the exponent portion of the value by shifting the value 64 by 23 positions to the left, setting the exponent bits in the fp32 format. This value can then be stored as a variable fp32_e7 and quantized as described below. As shown above, the analytics server can also add 64 shifted by 23 to the inverse scale, which can boost the exponent by 64 and align the data correctly for execution by a floating point processor.

At operation **240,** the analytics server can quantize the first set of values to generate a quantized set of values. For example, the analytics server can quantize the first set of values by multiplying the first set of values with the scaling value, described above. $quantized_element = inv_scale * fp 32 _e 8$ In this example, the analytics server can multiply each value (e.g., fp32_e8) by the scaling value (e.g., inv_scale) to convert the floating-point value fp32_e8 into a quantized format. This can allow the analytics server to execute a neural network using the quantized values, reducing the precision of each value while maintaining the relative magnitude of the value.

At operation **250,** the analytics server can provide at least a portion of the quantized set of values as an input to a neural network. For example, the analytics server can provide at least a portion of the quantized set of values as an input to at least a portion (e.g., a layer) of the neural network. In an example, the analytics server can provide the quantized set of values directly to the input layer of the neural network, where they can be processed using operations adapted for reduced precision. In at least some examples, these operations can include quantized versions of convolution, matrix multiplication, and activation functions. The use of pre-quantized values from the analytics server can optimize computational efficiency, reduce memory usage, and improve inference speed while maintaining model performance. In another example, the analytics server can provide the quantized set of values to an intermediate portion (e.g., an intermediate layer) of the neural network to cause the intermediate layer to generate outputs that can be processed or are otherwise usable for automated robotic system operation. This can allow the neural network to leverage quantized data at various stages of its architecture and improve the ability of the neural network to process relevant portions of data without unnecessarily processing all possible (raw) data available.

At operation **260,** the analytics server can control operation of the automated robotic system based on the output of the neural network. For example, the analytics server can process the output of the neural network to generate control commands for the robotic system (e.g., to increase or decrease acceleration, maintain or change headings and/or directions, etc.). In at least some examples, the analytics server can transmit these control commands to a controller in communication with one or more actuators, etc. of the automated robotic system. The analytics server can then cause the automated robotic system to execute specific movements or actions based on (e.g., in response to) the output generated by the neural network, such as adjusting the trajectory of the automated robotic system to avoid obstacles or performing precise manipulations. In some embodiments, the analytics server can continuously monitor the robotic system's performance and adjust control parameters in real-time, leveraging the neural network's ability to adapt to changing conditions.

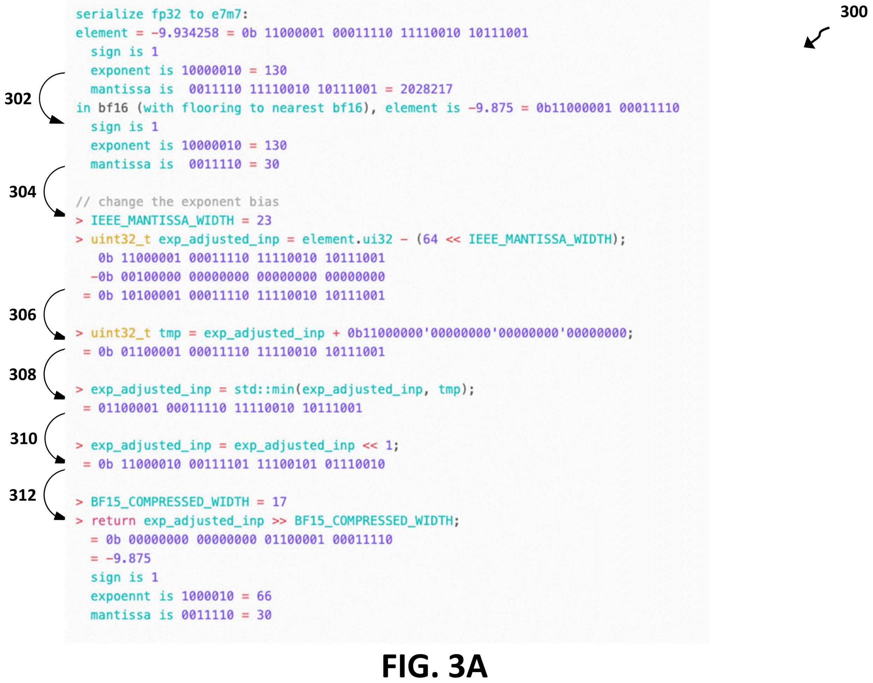

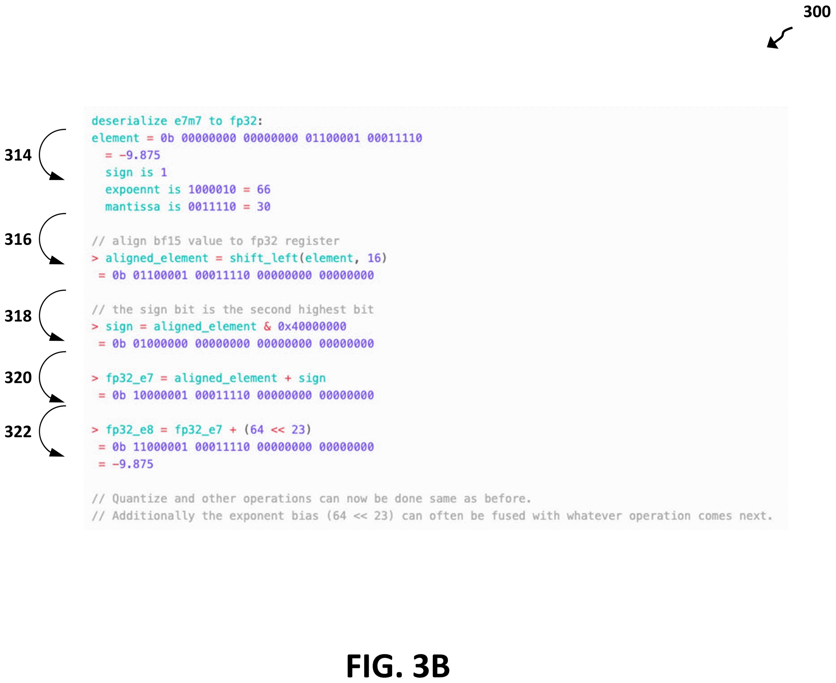

**FIGS. 3A** and **3B** illustrate an example implementation **300** involving serialization and deserialization of floating-point values during operation of an automated robotic system, according to embodiments. The implementation **300** may involve the execution of one or more operations that are the same as, or similar to, those described with respect to the method **200** of **FIG. 2****.** However, other embodiments may include additional or alternative operations or may omit one or more operations altogether. The implementation **300** is described as being executable by an analytics server (e.g., a computer similar to the analytics server **110a).** However, one or more steps of the implementation **300** may be executed by any number of computing devices operating in the distributed computing system described in **FIGS. 1A** and **1B** (e.g., a processor of the egos **140** and/or egos computing device **141).** For instance, one or more computing devices may locally perform some or all of the steps described in the implementation **300.**

Initially, to serialize and process input data having one or more values, at **302,** an analytics server can obtain input data (e.g., associated with 2D and/or 3D data used to represent an environment proximate to an automated robotic system). The analytics server can then execute one or more operations based on the initial fp32 representation of the element -9.934258 to extract components from the input data and represent each value in binary. In the illustrated example, the components of the "element" are extracted as a binary representation 0b 11000001 00011110 11110010 10111001. The sign bit is 1, indicating a negative number, the exponent is 10000010 (which is 130 in decimal), and the mantissa is 0011110 11110010 10111001 (which is 2028217 in decimal). The analytics server can then convert the binary representation to bf16 format, which rounds the value to -9.875 with a binary representation of 0b 11000001 00011110, where the sign is 1, the exponent is still 10000010 (130 in decimal), and the mantissa is 0011110 (or 30 in decimal).

At **304,** the analytics server can adjust (e.g., change) the exponent bias to establish a substantially symmetric exponent range. More specifically, the analytics server can take the binary representation of the value and process it as an unsigned integer. In the illustrated example, the analytics server can process the value by adjusting the exponent bias to subtract 64 and change the exponent bias (e.g., here, shifting the established bias 64 by 23 bits to adjust the exponent bias from 127 to 64).

At **306,** the analytics server can establish a temporary value that is associated with a rounding bias.

At **308,** the analytics server can select the smaller value by comparing the adjust integer value that is based on the input data and the temporary value. In this example, the analytics server can set the selected smaller value as the value being processed.

At **310,** the analytics server can then perform a shift left to the value being processed.

At **312,** the analytics server can then shift the value being processed right by a bf15 width to align the value with a 32 bit register. Once aligned, the analytics server can return the value.

To deserialize the value, at **314** the analytics server can again obtain and extract components from the value being processed. In this example, the analytics server can determine that for the value 0b 00000000 00000000 01100001 00011110 (-9.875), the sign is 1, the exponent is 1000010 = 66, and the mantissa is 0011110 = 30.

At **316,** the analytics server can align the binary representation of the value in bf15 to matcha fp32 register by performing a bitwise shift left 16 positions.

At **318,** the analytics server can then extract the sign bit from the value.

At **320,** the analytics server can then add the sign bit back to the value being processed.

At **322,** the analytics server can then perform a left shift of the value 64 by 23 bits and reestablish the value so in the first-received floating point (fp32) format. The analytics server can then use the value in downstream neural networks.

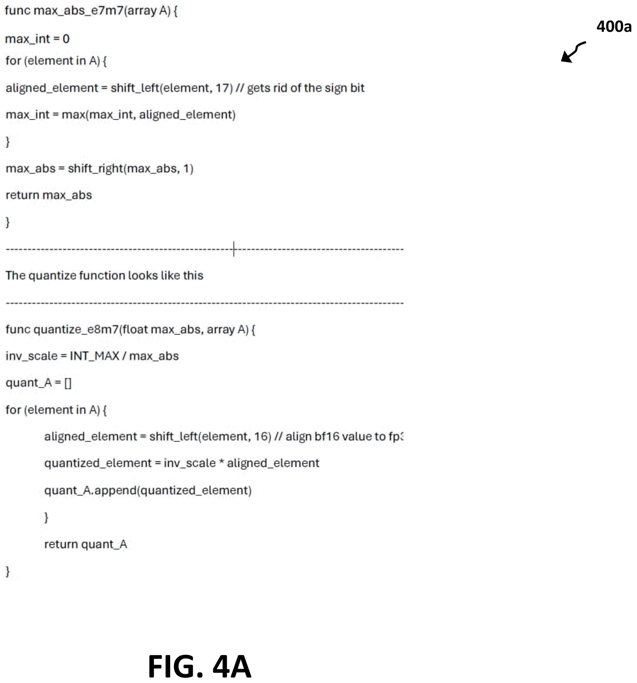

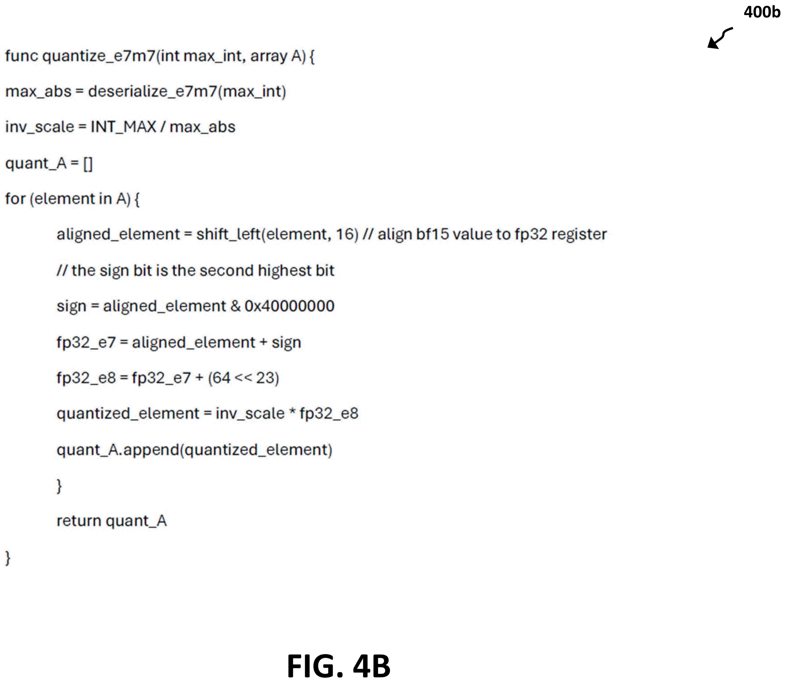

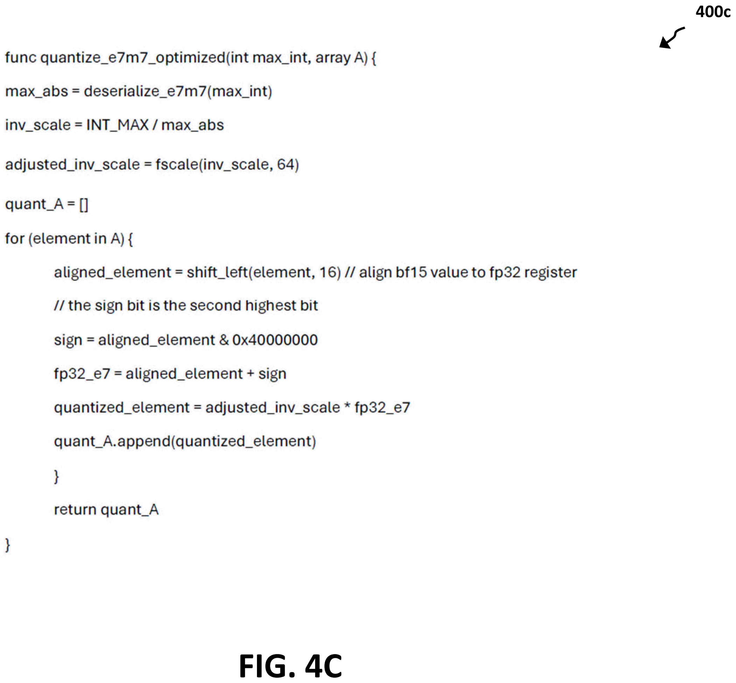

**FIGS. 4A-4C** illustrate example functions **400a-400c** that can be implemented, according to embodiments. The functions **400a-400c** may involve the execution of one or more operations that are the same as, or similar to, those described with respect to the method **200** of **FIG. 2** and/or the implementation **300** of **FIGS. 3A** and **3B****.** However, other embodiments may include additional or alternative operations or may omit one or more operations altogether. The functions **400a-400c** are described as being executable by an analytics server (e.g., a computer similar to the analytics server **110a).** However, one or more steps of the functions **400a-400c** may be executed by any number of computing devices operating in the distributed computing system described in **FIGS. 1A** and **1B** (e.g., a processor of the egos **140** and/or egos computing device **141).** For instance, one or more computing devices may locally perform some or all of the steps described in the functions **400a-400c.**

In **400a,** the analytics server can implement the first function (func max_abs_e7m7), by initializing a variable max_int as zero. The analytics server can then iterate over each element in the array A, performing a left shift operation to align each element by removing the sign bit. During each iteration, the function updates max_int with the maximum value found between the current max_int and the aligned element. After completing the loop, the function performs a right shift operation on max_int to adjust the maximum value. Finally, the function returns this adjusted value as max_abs.

The analytics server can implement the second function (func quantize_e8m7) by calculating an inverse scale, which is the maximum integer value divided by max_abs. It initializes an empty list quant_A to store the quantized elements. The analytics server can then iterate over each element in the array A, performing a left shift operation to align each element to an fp32 register. For each aligned element, the function multiplies it by the inverse scale to produce a quantized element. This quantized element is appended to the list quant_A. After processing all elements, the function returns the list quant_A, containing the quantized elements. These functions can allow the analytics server to efficiently process and quantize numerical data.

In **400b,** the analytics server can implement a function (func quantize_e7m7) by deserializing the integer max_int to obtain max_abs. The analytics server can then calculate an inverse scale by dividing the maximum integer value by max_abs. The analytics server can then initialize an empty list quant_A to store the quantized elements.

The analytics server can iterate over each element in the array A, performing a left shift operation to align each element to an fp32 register. For each aligned element, the analytics server can extract the sign bit, which is the second highest bit, using a bitwise AND operation. The function can then add the sign bit to the aligned element to produce fp32_e7. Next, the analytics server can add a constant value shifted left by 23 bits to fp32_e7 to produce fp32_e8. Each fp32_e8 value can then be multiplied by the inverse scale to produce a quantized element. This quantized element can be appended to the list quant_A. After processing all elements, the analytics server can return the list quant_A, containing the quantized elements. This function can allow the analytics server to efficiently quantize numerical data.

In **400c,** the analytics server can implement a function (quantize_e7m7_optimized) to deserialize the integer max_int and obtain max_abs. The analytics server can calculate an inverse scale by dividing the maximum integer value by max_abs. The analytics server can further adjust the inverse scale using the fscale function with a factor of 64. An empty list quant_A can be initialized to store the quantized elements.

The analytics server can iterate over each element in the array A, performing a left shift operation to align each element to an fp32 register by 16 bits. For each aligned element, the analytics server can extract the sign bit, which is the second highest bit, using a bitwise AND operation. The analytics server can then add the sign bit to the aligned element to produce fp32_e7. Each fp32_e7 value can be multiplied by the adjusted inverse scale to produce a quantized element. This quantized element can be appended to the list quant_A. After processing all elements, the analytics server can return the list quant_A, containing the quantized elements. This function can allow the analytics server to efficiently quantize numerical data with optimized scaling. This technique can allow the analytics server to use the high bandwidth data formats for int8 MAC accelerators. An advantage of using e7m7 is that neural networks do not need the full range of IEEE fp32 values for inference and instead the analytics server can be configured to reassign that one bit from exponent in the mantissa.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of this disclosure or the claims.

Embodiments implemented in computer software may be implemented in software, firmware, middleware, microcode, hardware description languages, or any combination thereof. A code segment or a machine-executable instruction may represent a procedure, function, subprogram, program, routine, subroutine, module, software package, class, or any combination of instructions, data structures, or program statements. A code segment may be coupled to another code segment or a hardware circuit by passing and/or receiving information, data, arguments, parameters, or memory contents. Information, arguments, parameters, data, etc., may be passed, forwarded, or transmitted via any suitable means, including memory sharing, message passing, token passing, network transmission, etc.

The actual software code or specialized control hardware used to implement these systems and methods is not limited to the claimed features or this disclosure. Thus, the operation and behavior of the systems and methods were described without reference to the specific software code; it is understood that software and control hardware can be designed to implement the systems and methods based on the description herein.

When implemented in software, the functions may be stored as one or more instructions or code on a non-transitory, computer-readable, or processor-readable storage medium. The steps of a method or algorithm disclosed herein may be embodied in a processor-executable software module, which may reside on a computer-readable or processor-readable storage medium. A non-transitory computer-readable or processor-readable media includes both computer storage media and tangible storage media that facilitate the transfer of a computer program from one place to another. A non-transitory, processor-readable storage media may be any available media that can be accessed by a computer. By way of example, and not limitation, such non-transitory, processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that can be accessed by a computer or processor. Disk and disc, as used herein, include compact disc (CD), laser disc, optical disc, digital versatile disc (DVD), Blu-ray disc, and floppy disk, where "disks" usually reproduce data magnetically, while "discs" reproduce data optically with lasers. Combinations of the above should also be included within the scope of computer-readable media. Additionally, the operations of a method or algorithm may reside as one or any combination or set of codes and/or instructions on a non-transitory, processor-readable medium and/or computer-readable medium, which may be incorporated into a computer program product.

The preceding description of the disclosed embodiments is provided to enable any person skilled in the art to make or use the embodiments described herein and variations thereof. Various modifications to these embodiments will be readily apparent to those skilled in the art, and the principles defined herein may be applied to other embodiments without departing from the spirit or scope of the subject matter disclosed herein. Thus, the present disclosure is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A method, comprising:
obtaining, by one or more processors, input data comprising a first set of values represented using a first data format during operation of an automated robotic system;
determining, by the one or more processors, a maximum absolute value from among the first set of values based on the input data;
in response to determining the maximum absolute value, adjusting, by the one or more processors, each value of the first set of values based on the maximum absolute value;
quantizing, by the one or more processors, the first set of values based on an exponent and a mantissa of each value to generate a quantized set of values having a second data format;
providing, by the one or more processors, at least a portion of the quantized set of values to a neural network to cause the neural network to generate an output based on the quantized set of values; and
controlling, by the one or more processors, operation of the automated robotic system based on the output of the neural network.

2. The method of claim 1, wherein adjusting each value comprises:
determining, by the one or more processors, a scaling value based on the maximum absolute value and a predetermined maximum value; and
updating, by the one or more processors, each value by multiplying each value with the scaling value.

3. The method of claim 1 or 2, wherein the first data format comprises a floating point format, and wherein the second data format comprises an integer format.

4. The method of one of the preceding claims, wherein adjusting the exponent of each value of the first set of values comprises:
removing, by the one or more processors, at least one first bit from an exponent portion of each value; and
shifting, by the one or more processors, at least one second bit from the exponent portion and a mantissa portion of each value left by at least one position to align the set of values.

5. The method of claim 4, further comprising: reassigning, by the one or more processors, a first bit from the exponent portion of each value to the mantissa portion of each value.

6. The method of one of the preceding claims, further comprising: updating, by the one or more processors, each value of the first set of values in accordance with a bias to configure each value to be associated with a substantially symmetric exponent range.

7. The method of one of the preceding claims, further comprising:
extracting, by the one or more processors, a sign value from the set of values, and
updating, by the one or more processors, the set of values based on the sign value.

8. A system for quantizing floating-point values during operation of an automated robotic system, the system comprising:
one or more processors configured to perform the method of one of the preceding claims.

9. One or more non-transitory computer-readable media storing instructions thereon that, when executed by one or more processors, cause the one or more processors to perform the method of one of claims 1 to 7.
